# EUROPEAN PATENT APPLICATION

(11) **EP 1 578 141 A1**
(43) Date of publication of application: **21.09.2005**
(21) Application number: 04006792.8
(22) Date of filing: 19.03.2004
(51) Int. Cl.: H04N 9/806

(54) **Method and apparatus for adapting the speed or pitch of replayed or received digital audio signals**

(71) Applicant: DEUTSCHE THOMSON-BRANDT GMBH, 78048 Villingen-Schwenningen (DE)
(72) Inventor: Schröder, Ernst F., 30655 Hannover (DE); Keesen, Heinz-Werner, 30173 Hannover (DE); Boehm, Johannes, 37083 Göttingen (DE)
(74) Representative: Hartnack, Wolfgang

(57) **Abstract**

The major TV systems in the world use interlaced scanning and either 50Hz field frequency or 60Hz field frequency. However, movies are produced in 24Hz frame frequency and progressive scanning, which format will be used for future digital video discs to be sold in 50Hz countries. In 50Hz display devices the disc content is normally presented with increased A/V signal speed and thereby increased audio pitch. According to the invention, parts of the audio signal or signals are dropped, or are inserted or repeated, in order to achieve upon reproduction on average the original audio source signal pitch, and to enable audio output via a standardised digital audio interface. The insertion/repeat or dropping is controlled by a corresponding marking information signal which can be generated automatically at encoder or at decoder side, or by an operator at encoder side.

## Description

The invention relates to a method and to an apparatus for adapting the speed or pitch of replayed or received digital audio signals having a given speed or pitch, or for marking digitally encoded audio signals or PCM processed audio signals having a given speed or pitch.

### Background

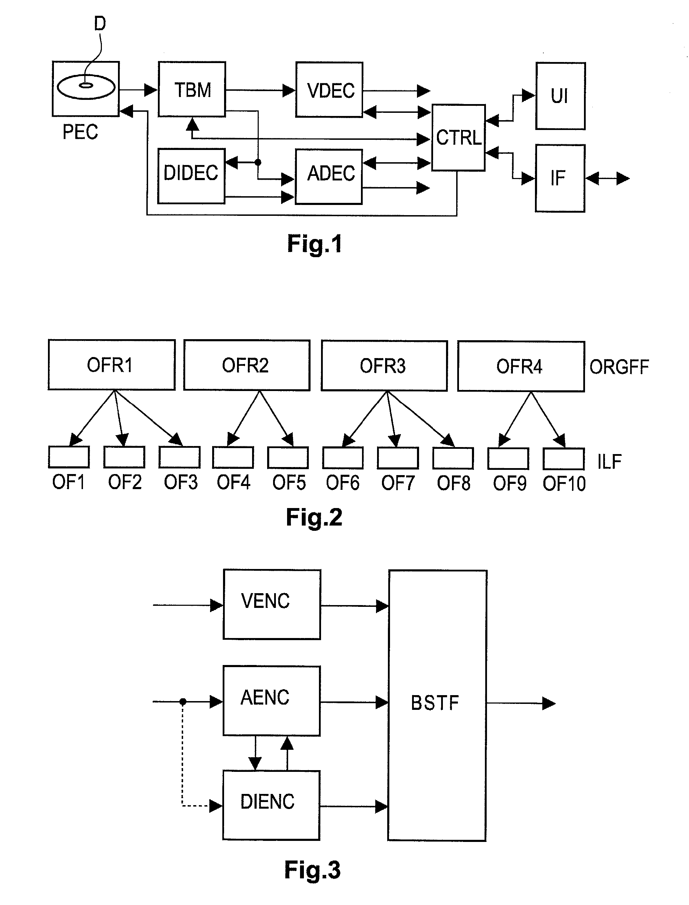

Movies are produced in 24Hz frame frequency and progressive scanning format for projection in film theatres, adhering to a worldwide standard for 35mm film. The projection speed has been fixed since many decades to 24 full pictures per second. Accompanying sound signals, typically present as optical tracks on the same material, are replayed with the same speed. Such playback can be performed in virtually any existing film theatre.
The situation becomes different when such movies are played back via a television system, e.g. by a broadcaster. The major TV systems in the world use interlaced scanning and either 50Hz field frequency (e.g. in Europe and China for PAL and SECAM) or 60Hz field frequency (e.g. in USA and Japan for NTSC), i.e. in 60Hz countries the TV system is constructed such that 30 full video frames are displayed per second. Movie playback is performed with basically correct overall speed by presenting one film frame alternately in two or in three video fields, called '3:2 pull-down'. It should be noted that in the NTSC colour TV system the actual field rate is 59.94Hz, which means that the movie is actually broadcast with 23.976 frames per second, i.e. slower than original speed by a factor of 1000/1001. This is generally not noticed by TV viewers.
The principle of 3:2 pull-down is depicted in Fig. 2, in which one field is inserted by field repetition every five fields. Interlaced fields ILF are derived from original film frames ORGFF. From a first original film frame OFR1 three output fields OF1 to OF3 are generated, and from a third original film frame OFR3 three output fields OF6 to OF8 are generated. From a second original film frame OFR2 two output fields OF4 and OF5 are generated, and from a fourth original film frame OFR4 two output fields OF9 and OF10 are generated, and so on.
In 50Hz countries the situation is more difficult. The simplest solution is running the movie with 25 frames per second, i.e. 4.2% faster. Although by this method the sound has a 4.2% higher pitch (nearly one half-tone higher), typically customers do not complain.
If movies are recorded on A/V media (e.g. DVDs) and such media are played back using TV receivers as presentation devices, generally the same principles apply. If the accompanying sound present on the medium is in digital form (e.g. linear PCM or AC-3 coded or DTS coded), either the playback device must decode and present the audio information with 4.2% higher speed, which generally is not a problem, or DVD Video discs sold in 50Hz countries must contain audio data streams that are already encoded such that, while the video signal is output with 4.2% higher speed, the DVD player's audio decoder automatically outputs the correct speed and pitch of the audio signal.

### Invention

On one hand it would be advantageous for worldwide release and distribution of A/V media , e.g. HDTV picture content discs, if only one content format had to be recorded or authored onto such media. On the other hand, most A/V playback devices output the sound information also via a standardised digital interface which is advantageous if the audio data stream or streams on the A/V storage medium are digitally encoded in e.g. AC-3 or DTS multi-channel format and an external decoder/amplifier is decoding and presenting the corresponding multi-channel surround sound. Such interface is typically designed according to the IEC60958 standard for PCM output and additionally according to the IEC61937 standard in case the audio signal has been encoded in AC-3 or DTS. For such interface the allowed tolerance for the audio sampling frequency is in the order of ±1*10⁻³, i.e. much less than the above-mentioned +4.2% deviation.
It would be possible to design the interface and the decoder/amplifier to accommodate such a deviation from the nominal clock and sampling frequency, but it cannot be taken for granted that all existing decoding devices exhibit this feature. It is therefore necessary to adapt or re-format the audio signal within the playback device, before it is sent to the digital output interface.

A problem to be solved by the invention is to adapt or re-format within a 25 frames-per-second based playback device the audio signal accompanying an original 24 frames-per-second video signal, before that audio signal is passed to the digital output interface of the playback device, and/or to ease that adaptation or re-formatting by providing already at source side corresponding auxiliary information in the data stream or streams transferred or broadcast. These problems are solved by the methods disclosed in claims 1 and 8. Apparatuses that utilise these methods are disclosed in claims 2 and 9.

One solution to this problem would be providing different audio data streams for 60Hz and for 50Hz countries on the same A/V storage medium, one for playback with normal speed, and a shorter one adapted for playback with a 4.2% higher speed. Another solution would be using a sampling rate converter, the application of which is straightforward if the audio signals are PCM signals, whereas encoded audio signals need to be decoded to PCM and then re-encoded to the respective encoded format, e.g. AC-3 or DTS.
An advantageously simpler processing, which requires no additional data streams to be provided on the A/V medium, consists of dropping/removing every 25th piece of audio information, be it a PCM sample, a group of samples, or a complete frame of encoded audio data when playing back A/V content from a 60Hz-countries A/V medium in 50Hz countries. This dropping/removing of audio information solves the above problem because a faster playback of A/V content calls for an increase in audio sampling frequency in the first place. When a standard (i.e. lower) sampling frequency is desired, then less audio samples have to be sent to the output interface within a fixed time interval.
It is well-known that such a simple operation on a digital audio signal works in general remarkably well, but - even when done randomly - can lead to very unpleasant audible distortions on audio signals having a clear harmonic structure that lasts for some 100 milliseconds.

For high-quality A/V playback, however, the inventive shortening or elongation of an audio signal is effected by dropping or removing, or by inserting or repeating, only those audio signal elements like PCM samples, blocks of samples, or single or multiple frames of encoded audio data, which have been marked in a separate process (authoring) as well-suited candidates for such operation. Such candidates can be e.g. samples or encoded frames representing silence parts or representing less harmonic and more noise-like parts of the audio signal.

In principle, the inventive method is suited for adapting the speed or pitch of one or more replayed or received digital audio signals having a given speed or pitch, including the steps:
- evaluating a marking information signal that indicates which parts of said audio signal or signals can be inserted or repeated or dropped without audibly or significantly deteriorating the resulting quality of the audio signal or signals following a corresponding insertion or repetition or dropping of parts of said audio signal or signals;
- inserting or repeating or dropping at least some parts of said audio signal or signals that are marked by said marking information signal such that on average the resulting speed or pitch of the such processed audio signal or signals corresponds to a desired speed or pitch which is different from said given speed or pitch,
or is suited for marking one or more digitally encoded audio signals, or for marking one or more PCM processed audio signals, said audio signal or signals having a given speed or pitch, including the steps:
- encoding one or more digital audio signals, or processing one or more PCM audio signals;
- generating marking information about at which temporal locations parts of the audio signal or signals can be repeated or inserted or dropped without subjectively deteriorating the resulting quality of said audio signal or signals upon presentation of the correspondingly decoded digital audio signal or signals, or of the correspondingly processed PCM audio signal or signals, said presentation to be carried out with a resulting average desired audio signal speed or pitch which is different from said given audio signal speed or pitch;
- formatting a resulting marking information signal together with the encoded audio signal or signals, or together with the processed PCM audio signal or signals, and possibly together with a accompanying related video signal;
- transmitting or recording the such formatted signals.

In principle the inventive apparatus is suited for adapting the speed or pitch of one or more replayed or received audio signals having a given speed or pitch, said apparatus including:
- means being adapted for evaluating a marking information signal that indicates which parts of said audio signal or signals can be inserted or repeated or dropped without audibly or significantly deteriorating the resulting quality of the audio signal or signals following a corresponding insertion or repetition or dropping of parts of said audio signal or signals;
- means being adapted for inserting or repeating or dropping at least some parts of said audio signal or signals that are marked by said marking information signal such that on average the resulting speed or pitch of the such processed audio signal or signals corresponds to a desired speed or pitch which is different from said given speed or pitch,
or is suited for marking one or more digitally encoded audio signals, or for marking one or more PCM processed audio signals, said audio signal or signals having a given speed or pitch, said apparatus including:
- means for encoding one or more digital audio signals, or for processing one or more PCM audio signals;
- means being adapted for generating marking information about at which temporal locations parts of the audio signal or signals can be repeated or inserted or dropped without subjectively deteriorating the resulting quality of said audio signal or signals upon presentation of the correspondingly decoded digital audio signal or signals, or of the correspondingly processed PCM audio signal or signals, said presentation to be carried out with a resulting average desired audio signal speed or pitch which is different from said given audio signal speed or pitch;
- means being adapted for formatting a resulting marking information signal together with the encoded audio signal or signals, or together with the processed PCM audio signal or signals, and possibly together with a related accompanying video signal.

Advantageous additional embodiments of the invention are disclosed in the respective dependent claims.

### Drawings

Exemplary embodiments of the invention are described with reference to the accompanying drawings, which show in:
- Fig. 1: Simplified block diagram of an inventive disc player;
- Fig. 2: Principle of 3:2 pull-down;
- Fig. 3: Simplified block diagram of an inventive encoder.

### Exemplary embodiments

In Fig. 1 a disk drive including a pick-up and an error correction stage PEC reads a 24Hz frame frequency format (24 fps) encoded video signal and related audio signals from a disc D. The output signal passes through a track buffer and de-multiplexer stage TBM to a video processor or decoder VDEC and an audio processor or decoder ADEC, respectively. A controller CTRL can control PEC, TBM, VDEC and ADEC. A user interface UI and/or an interface IF between a TV receiver or a display (not depicted) and the disc player are used to switch the player output to either 24Hz frame frequency mode or 25Hz frame frequency mode. In case of 25Hz frame frequency mode the disc can be read with a speed that is higher by a factor of 25/24. The interface IF may check automatically which mode or modes the TV receiver or a display can process and present. The replay mode information can be automatically derived from feature data (i.e. data about which display mode is available in the TV receiver or the display) received by interface IF that is connected by wire, by radio waves or optically to the TV receiver or the display device. The feature data can be received regularly by said interface IF, or upon sending a corresponding request to said TV receiver or a display device. As an alternative, the replay mode information is input by the user interface UI upon displaying a corresponding request for a user. In case of 25Hz frame frequency mode output from the video decoder VDEC, the audio processor/decoder ADEC receives from a drop/insert information generator or decoder DIDEC information about at which temporal locations parts of the PCM audio signals or of the encoded audio signals are to be removed/dropped, or to be repeated/inserted, by the audio processor/decoder. This drop/insert information can be generated automatically in stage DIDEC, or can be parsed from the bitstream that is replayed from disc D.
Instead of a disc player, the invention can also be used in other types of devices, e.g. in a digital settop box or a digital TV receiver, in which case the front-end including the disk drive and the track buffer is replaced by a tuner for digital signals.
Thus, a picture signal originally having a 24Hz frame frequency or a 48Hz field frequency can be replayed or displayed with 25Hz frame frequency or 50Hz field frequency, respectively, and the ratio of the desired or output audio signal speed or pitch to the correspondingly initially increased audio signal speed or pitch is 24/25.

In the encoder in Fig. 3 a video processor or encoder VENC receives and processes an input video signal and feeds its output signal to a bitstream formatter BSTF. An audio processor or encoder AENC receives and processes one or more input audio signals and feeds its output signal or signals to the bitstream formatter BSTF. A drop/insert information generator or encoder DIENC generates information about at which temporal locations parts of the PCM audio signals or of the encoded audio signals can be repeated or inserted without deteriorating the resulting (decoding) audio signal quality. It receives its audio input signal, or several channels of audio input signals, either from the audio encoder input signals or from AENC, and it provides its output signal or signals to AENC or to the bitstream formatter BSTF.

The invention is related to effecting elongation (or shortening) of an audio signal by inserting or repeating, or by dropping, audio elements like PCM samples, blocks of samples, or single or multiple frames of encoded audio, and by inserting/repeating or dropping only those elements that have been marked in a previous process (authoring) as well-suited candidates for such operation. These can be e.g. samples or encoded frames of silence or less harmonic and more noise-like parts of the audio signal.
The marking can be facilitated by an additional signal that is as small as a single bit per audio element to be inserted/repeated or dropped, but it can also be an elaborate measure of 'drop-ability' or 'repeat-ability' for that audio element.
Such additional information can be generated as follows: After normal authoring of the audio tracks in a studio they are handed over to an operator-assisted or automatic processing where the audio signal is searched for:
- silence periods;
- periods of very low amplitude amount level below one or several selectable thresholds;
- periods where the signal is noise-like (nearly flat spectral content), and/or
- other periods, which are usable for dropping or repeating/inserting.
For PCM audio signals such periods can be as short as a single audio sample and as long as several seconds or even more. For encoded audio signals such periods are typically not shorter than one single frame, a frame having typically a length in the order of 24ms to 32ms, and can last over several consecutive frames.
Following an automatic detection, a further operator-assisted mode may be used where an operator listens to the time-corrected version and confirms/rejects the findings generated in the automated process.

The detected periods in the audio signal or signals are thereafter marked appropriately within the audio data stream or streams. This marking can be a single-bit marking like 'can be dropped' or 'can be repeated', or can be a pattern representing a more exact or detailed type of signal like: 'silence', 'amplitude amount level is below a first threshold level', 'amplitude amount level is below a second threshold level different from the first threshold level', 'noise', 'noise-like spectrum', for example.

During playback in a A/V playback device the audio signal is read from the storage medium or received via broadcast. In case the audio playback speed deviates from the normal value, e.g. by +4.2% when playing a 24 fps video signal on a 50Hz interlaced video presentation device, then the recovered audio signal (either PCM or encoded audio frames) is searched for markings given the 'drop-ability' or the 'repeat-ability', and corresponding parts of the audio signal are dropped or repeated or inserted accordingly, so as to undo the speed change.
Depending on the required amount of actual speed change, not all parts of the audio signal marked accordingly are to be dropped or repeated. Excess audio data only are removed, or missing audio data only are inserted so as to recover on average the original timing or speed.

The inventive processing in the A/V playback device is used for sending audio data to the digital output interface with a conformant clock or sampling frequency. Thus an external standard-conform audio decoder can decode and present the received audio data.

In case of stereo or multi-channel or surround audio signals, preferably the insert or repeat or drop operations are carried out at a given time instant in all channels in the same way, whereby preferably the above marking operation checks all these channels and provides a marking in such case only where the above-mentioned marking conditions are fulfilled in all these channels. At encoder or studio side, a single marking information signal valid for all these channels can be generated and transmitted or recorded. Though not necessary in any case, it is advantageous to feed any internal audio decoder in the A/V playback device also with this correction information signal because otherwise the internally decoded audio signal (decoded by an internal decoder that is able to accommodate a larger range of deviating clock frequencies) and the externally decoded audio signal (decoded by an external decoder that relies on strict requirements for certain values of clock or sampling frequencies) may exhibit different timing and thus different pitch. Thereby the simultaneous presentation of both decoded audio signals would be very unpleasant.

A big advantage of the invention is that a single format version of A/V storage media can be used for playback in 50Hz and 60Hz countries.

The values 24 fps and 25 fps and the other numbers mentioned above are example values which can be adapted correspondingly to other applications of the invention.
The invention can be applied for:
- packaged media (DVD, blue laser discs, etc.),
- downloaded media including video-on-demand, near video-on-demand, etc.,
- broadcast media.
The invention can be applied in an optical disc player or in an optical disc recorder, or in a hard disk recorder, e.g. an HDD recorder or a PC, or in a settop box, or in a TV receiver.

## Claims

1. Method for adapting the speed or pitch of one or more replayed (D, PEC, TBM) or received digital audio signals having a given speed or pitch, **characterised by** the steps:
- evaluating (DIDEC) a marking information signal that indicates which parts of said audio signal or signals can be inserted or repeated or dropped without audibly or significantly deteriorating the resulting quality of the audio signal or signals following a corresponding insertion or repetition or dropping of parts of said audio signal or signals;
- inserting or repeating or dropping (ADEC) at least some parts of said audio signal or signals that are marked by said marking information signal such that on average the resulting speed or pitch of the such processed audio signal or signals corresponds to a desired speed or pitch which is different from said given speed or pitch.

2. Apparatus for adapting the speed or pitch of one or more replayed (D, PEC, TBM) or received digital audio signals having a given speed or pitch, said apparatus being **characterised by**:
- means (DIDEC) being adapted for evaluating a marking information signal that indicates which parts of said audio signal or signals can be inserted or repeated or dropped without audibly or significantly deteriorating the resulting quality of the audio signal or signals following a corresponding insertion or repetition or dropping of parts of said audio signal or signals;
- means (ADEC) being adapted for inserting or repeating or dropping at least some parts of said audio signal or signals that are marked by said marking information signal such that on average the resulting speed or pitch of the such processed audio signal or signals corresponds to a desired speed or pitch which is different from said given speed or pitch.

3. Method according to claim 1, or apparatus according to claim 2, wherein said processed audio signal or signals having said desired speed or pitch are fed to an output interface (IF) the operation of which is based on a standardised clock frequency corresponding to said desired audio signal speed or pitch.

4. Method according to claim 1 or 3, or apparatus according to claim 2 or 3, wherein said replayed or received audio signal or signals are stored or recorded together with a related accompanying video signal on a storage medium (D), e.g. an optical disc or a hard disk, or are broadcast or transferred as a digital TV signal, said video signal originally having a 24Hz frame frequency or a 48Hz field frequency and being replayed or displayed with 25Hz frame frequency or 50Hz field frequency, respectively, and the ratio of said desired audio signal speed or pitch to said given audio signal speed or pitch being 24/25.

5. Method according to one of claims 1, 3 or 4, or apparatus according to one of claims 2 to 4, wherein said marking information signal evaluated (DIDEC) is derived from a recorded or transmitted marking information signal.

6. Method according to one of claims 1, 3 or 4, or apparatus according to one of claims 2 to 4, wherein said marking information signal evaluated is automatically generated (DIDEC) before recording said audio signal or signals or upon replay or reception of said audio signal or signals by determining silence periods or periods of very low amplitude amount level below one or several selectable thresholds and/or periods where the audio signal or signals are noise-like or have a nearly flat spectral content.

7. Method according to one of claim 1 or 3 to 6, or apparatus according to one of claims 2 to 6, wherein said audio signals represent a stereo signal or multi-channel or surround signals and wherein said evaluated (DIDEC) marking information signal is applied in all channels in the same way at corresponding time instants.

8. Method for marking one or more digitally encoded audio signals, or for marking one or more PCM processed audio signals, said audio signal or signals having a given speed or pitch, **characterised by** the steps:
- encoding (AENC) one or more digital audio signals, or processing one or more PCM audio signals;
- generating (DIENC) marking information about at which temporal locations parts of the audio signal or signals can be repeated or inserted or dropped without subjectively deteriorating the resulting quality of said audio signal or signals upon presentation of the correspondingly decoded digital audio signal or signals, or of the correspondingly processed PCM audio signal or signals, said presentation to be carried out with a resulting average desired audio signal speed or pitch which is different from said given audio signal speed or pitch;
- formatting (BSTF) a resulting marking information signal together with the encoded audio signal or signals, or together with the processed PCM audio signal or signals, and possibly together with a accompanying related video signal;
- transmitting or recording the such formatted signals.

9. Apparatus for marking one or more digitally encoded audio signals, or for marking one or more PCM processed audio signals, said audio signal or signals having a given speed or pitch, said apparatus being **characterised by**:
- means (AENC) for encoding one or more digital audio signals, or for processing one or more PCM audio signals;
- means (DIENC) being adapted for generating marking information about at which temporal locations parts of the audio signal or signals can be repeated or inserted or dropped without subjectively deteriorating the resulting quality of said audio signal or signals upon presentation of the correspondingly decoded digital audio signal or signals, or of the correspondingly processed PCM audio signal or signals, said presentation to be carried out with a resulting average desired audio signal speed or pitch which is different from said given audio signal speed or pitch;
- means (BSTF) being adapted for formatting a resulting marking information signal together with the encoded audio signal or signals, or together with the processed PCM audio signal or signals, and possibly together with a related accompanying video signal.

10. Method according to claim 8, or apparatus according to claim 9, wherein said audio signal or signals are accompanied by a related video signal, said video signal having a 24Hz frame frequency or a 48Hz field frequency, and the ratio of said desired audio signal speed or pitch to said given audio signal speed or pitch being 24/25.

11. Method according to claim 8 or 10, or apparatus according to claim 9 or 10, wherein said marking information is automatically generated (DIENC) by determining silence periods or periods of very low amplitude amount level below one or several selectable thresholds and/or periods where the audio signal or signals are noise-like or have a nearly flat spectral content.

12. Method according to one of claim 8, 10 or 11, or apparatus according to one of claims 9 to 11, wherein said audio signals represent a stereo signal or multi-channel or surround signals and wherein said marking information signal is generated for all channels in the same way at corresponding time instants.
